# EUROPÄISCHE PATENTSCHRIFT

(11) **EP 1 674 506 B1**
(45) Veröffentlichungstag und Bekanntmachung des Hinweises auf die Patenterteilung: **13.06.2012**
(21) Anmeldenummer: 05027260.8
(22) Anmeldetag: 14.12.2005
(51) Int. Cl.: C08J 5/18, C08K 3/36

(54) **Matte, biaxial orientierte Polyesterfolie**
Matt biaxially oriented polyester film
Film de polyester mat à orientation biaxiale

(30) Priorität: 21.12.2004 DE 102004061390
(43) Veröffentlichungstag der Anmeldung: 28.06.2006
(73) Patentinhaber: Mitsubishi Polyester Film GmbH, 65203 Wiesbaden (DE)
(72) Erfinder: Jesberger, Martin, Dr., 55122 Mainz (DE); Konrad, Matthias, Dr., 65719 Hofheim (DE); Kiehne, Thorsten, Dr., Nagahama Shiga, 526-0031 (JP); Murschall, Ursula, Dr., 55283 Nierstein (DE)
(74) Vertreter: Schweitzer, Klaus

(56) Entgegenhaltungen:
- EP-A- 1 197 327
- EP-A- 1 234 848
- EP-A- 1 442 875

## Beschreibung

Die Erfindung betrifft die Verwendung einer einschichtigen, biaxial orientierten Polyesterfolie, die SiO₂-Partikel in einer Gesamtpartikelkonzentration von 0,2 bis < 1,0 Gew.-% (bezogen auf das Gewicht der Folie) und mit einer mittleren Teilchengröße (d₅₀) von 2,5 bis 4,5 µm enthält und - abgesehen von gegebenenfalls vorhandenen Katalysatorpräzipitaten - keine weiteren Partikel enthält, die die Oberflächeneigenschaften und/oder Optik der Folie beeinflussen bzw. beeinflussen können, wobei der Glanz der Folie, gemessen bei 60° und 85° (nach DIN 67 530), bei beiden Messwinkeln zwischen 10 und 100 liegt, im industriellen Sektor, beispielweise als Treibhausfolie.

Die Industrie hat einen hohen Bedarf an Kunststofffolien wie z. B. biaxial orientierten Polypropylen- oder biaxial orientierten Polyesterfolien, die definierte Oberflächen und optische Eigenschaften aufweisen. Folien mit gleichmäßiger, nicht zu hoher Oberflächenrauheit sind von Interesse in speziellen Anwendungen. Insbesondere bei der Verwendung als Treibhausfolien ist eine Kombination von hoher Trübung bei gleichzeitiger hoher Transparenz gefordert. Die Realisierung dieser Anforderung ist besonders schwierig, da diese beiden Parameter gegenläufig sind. Durch die Einarbeitung von Partikeln kann zwar die Trübung heraufgesetzt werden, gleichzeitig erniedrigt sich damit aber auch die Transparenz, was nicht erwünscht ist. Die Lösung dieses Problems war nicht trivial.

Die erfindungsgemäß verwendete Folie zeichnet sich durch charakteristische optische Eigenschaften aus. Die hohe Trübung der Folie erhöht den Streuanteil des Lichtes. Bei gleichzeitig hoher Transparenz verbessert die Folie, beispielsweise bei Verwendung als Treibhausfolie, das Wachstum der Pflanzen und erhöht dadurch die Wirtschaftlichkeit der Pflanzenaufzucht. Die erhöhte arithmetische Rauigkeit Rₐ begünstigt die Verarbeitung der Folie im Herstellungsprozess.

In der US-A-3,154,461 wird ein Verfahren zur Herstellung einer biaxial orientierten Folie aus thermoplastischem Kunststoff (z. B. Polyethylenterephthalat, Polypropylen) mit matter Oberfläche beschrieben, bei dem die Folie inkompressible Partikel (z. B. Calciumcarbonat, Siliciumdioxid) in einer Größe von 0,3 bis 20 µm und in einer Konzentration von 1 bis 25 % enthält. Für viele Anwendungen ist die nach diesem Verfahren hergestellte Folie zu rau.

In der EP-A-1 197 326 wird eine matte, biaxial orientierte Polyesterfolie beschrieben, die 1 bis 10 Gew.-% Partikel mit einer mittleren Partikelgröße von 2 bis 5 µm enthält. Die mittlere Rauigkeit Rₐ dieser Folien liegt im Bereich von 150 bis 1000 nm.

In der EP-A-0 152 265 wird eine Polyesterfolie beschrieben, die 0,01 bis 1,0 Gew.-% Siliziumdioxid und/oder Titandioxid mit einer mittleren Teilchengröße von 0,01 bis 0,5 µm und 0,02 bis 0,5 Gew.-% Calciumcarbonat mit einer mittleren Teilchengröße von 0,04 bis 0,48 µm enthält. Diese Folie besitzt aufgrund der kleinen Partikel eine sehr niedrige Rauigkeit, über die Transparenz werden keine Aussagen getroffen.

Die EP-A-1 197 327 und die EP-A-1 442 875 beschreiben mindestens zweischichtige Folien, wobei diese ein oder mehrere Partikelsysteme enthalten können. Die Folien gemäß EP-A-1 197 327 weisen die Partikel nur in den Deckschichten auf.

Die EP-A-1 234 848 beschreibt glänzende Folien mit einer geringen Trübung (kleiner 4 % bei einem Messwinkel von 20°) als Verpackungsfolien.

Aufgabe der vorliegenden Erfindung war es, eine biaxial orientierte Polyesterfolie für die Verwendung im Industriesektor bereitzustellen, die eine gleichmäßige Rauigkeit und definierte optische Eigenschaften aufweist. Die Struktur der Oberfläche soll dazu führen, dass sich die Folie gut beschichten lässt.

Die Aufgabe wird erfindungsgemäß durch die Verwendung einer einschichtigen, biaxial orientierten Polyesterfolie im industriellen Sektor gelöst, die Siliziumdioxid zur Erzeugung der Oberflächenrauigkeit und zur Einstellung der Trübung bei hoher Transparenz enthält. Die Konzentration des Siliziumdioxids liegt bei 0,2 bis <1,0 Gew.-%, bevorzugt 0,4 bis 0,9 Gew.-%, besonders bevorzugt bei 0,6 bis 0,8 Gew.-%, bezogen auf das Gesamtgewicht der Folie. Die mittlere Teilchengröße (d₅₀) beträgt 2,5 bis 4,5 µm. Abgesehen von gegebenenfalls vorhandenen Katalysatorpräzipitaten enthält die Folie keine weiteren Partikel, die die Oberflächeneigenschaften und/oder Optik der Folie beeinflussen bzw. beeinflussen können. Der Glanz der Folie, gemessen bei 60° und 85° (nach DIN 67 530), bei beiden Messwinkeln liegt zwischen 10 und 100. Sofern erforderlich kann die Folie darüber hinaus noch einen UV-Absorber enthalten. Als UV-Absorber werden dabei vorzugsweise Triazine, z. B. ^{®}Tinnuvin 1577 der Firma Ciba, Basel, Schweiz, verwendet.

Bevorzugt weist die erfindungsgemäß verwendete Folie folgende Eigenschaften auf:
- Die Trübung der Folie liegt im Bereich zwischen 38 und 60 %, bevorzugt zwischen 40 und 58 % und besonders bevorzugt zwischen 42 und 56 %; bevorzugt liegt gleichzeitig die Transparenz der Folie im Bereich zwischen 70 und 95 %, bevorzugt zwischen 80 und 92 % und besonders bevorzugt zwischen 82 und 90 %.
- Die SiO₂-Partikel sind kleiner gleich 4,5 µm, bevorzugt kleiner gleich 4,0 µm und besonders bevorzugt kleiner gleich 3,9 µm (d₅₀) und größer als 2,5 µm, bevorzugt größer 2,8 µm und besonders bevorzugt größer als 3,0 µm. Das Siliziumdioxid ist bevorzugt amorphe Kieselsäure.
- Der Glanz der Folie, gemessen bei 60° und 85°, liegt bei beiden Messwinkeln zwischen 15 und 85 und besonders bevorzugt zwischen 20 und 70.
- Der arithmetische Mittenrauwert Rₐ (DIN 4762) liegt zwischen 170 und 1000 nm, bevorzugt zwischen 180 und 950 nm und besonders bevorzugt zwischen 200 und 800 nm.

Erfindungsgemäß ist die verwendete Folie einschichtig aufgebaut und umfasst in diesem Fall als Schicht nur die Basisschicht (B).

Die Basisschicht (B) der Folie enthält bevorzugt mindestens 70 Gew.-% thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie weiter unten aufgeführt sind. In einer besonders bevorzugten Ausführungsform besteht die Basisschicht aus Polyethylenterephthalat-Homopolymer. Geeignete andere aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt, (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Andere aromatische Dicarbonsäuren sind bevorzugt Benzoldicarbonsäuren, Naphthalindicarbonsäuren, beispielsweise Naphthalin-1,4- oder -1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die (C₃ bis C₁₉)-Alkandisäuren besonders geeignet, wobei der Alkanteil geradkettig oder verzweigt sein kann.

Die Herstellung der Polyester kann z. B. nach dem Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Folie enthält SiO₂-Partikel zur Erzeugung der gewünschten Oberflächeneigenschaften und Optik.

Die Partikelkonzentration, bezogen auf das Gesamtgewicht der Folie, beträgt 0,2 bis <1,0 Gew.-%, bevorzugt 0,4 bis 0,9 Gew.-%, besonders bevorzugt 0,6 bis 0,8 Gew.-%. Sind weniger als 0,2 Gew.-% vorhanden, so erniedrigt sich die Trübung auf kleiner als 38 %. Sind 1,0 Gew.-% oder mehr Partikel vorhanden, so erhöht sich die Trübung auf größer als 60 %. Die SiO₂-Partikelweisen eine mittlere Teilchengröße von 2,5 bis 4,5 µm, bevorzugt von 2,8 bis 4,2 µm und besonders bevorzugt von 3,0 bis 3,9 µm (d₅₀) auf. Sind die Partikel größer als 4,5 µm, so erhöht sich bei gleicher SiO₂₋Konzentration die Trübung bei gleichzeitiger Erniedrigung der Transparenz. Sind die Partikel kleiner als 2,5 µm, so erniedrigt sich bei gleicher SiO₂-Konzentration die Trübung und erhöht sich die Transparenz. Als Siliziumdioxidpartikel werden bevorzugt amorphe Kieselsäurepartikel eingesetzt.

Dabei ist überraschend, dass der arithmetische Mittenrauwert Rₐ (DIN 4762) zwischen 170 und 1000 nm, bevorzugt zwischen 180 und 950 nm und besonders bevorzugt zwischen 200 und 800 nm liegt. Durch die höhere Rauheit wird das Blockverhalten der Folie reduziert und die Wicklung im technischen Prozess verbessert. Werden bei der gleichen SiO₂-Konzentration kleinere Partikel eingesetzt, so sinken Rₐ und die Trübung.

Die ausgewählte Art, Konzentration und Teilchengröße der SiO₂-Partikel bewirkt außerdem, dass die Transparenz der Folie zwischen 70 und 95 %, bevorzugt zwischen 80 und 92 % und besonders bevorzugt zwischen 82 und 90 % liegt und die Trübung der Folie im Bereich zwischen 38 und 60 %, bevorzugt zwischen 40 bis 58 % und besonders bevorzugt zwischen 42 und 56 % und der Glanz der Folie, gemessen bei 60° und 85° bei beiden Messwinkeln zwischen 10 und 100, bevorzugt zwischen 15 und 85 und besonders bevorzugt zwischen 20 und 70 ist.

Neben den oben beschriebenen SiO₂-Partikeln enthält die erfindungsgemäß verwendete Folie keine weiteren Partikel, die die Oberflächeneigenschaften und/oder Optik der Folie beeinflussen bzw. beeinflussen können, wie CaCO₃-, TiO₂-, BaSO₄-Partikel etc. Allenfalls können noch übliche Stabilisatoren enthalten sein wie Phosphorverbindungen wie Phosphorsäure oder Phosphorsäureester, die aus der Polyester-Rohstoffproduktion stammen und üblicherweise als "interne" Partikel oder (Katalysator) Präzipitate bezeichnet werden.

Es hat sich darüber hinaus als zweckmäßig erwiesen, wenn die erfindungsgemäß verwendete Folie noch 0 bis 10 Gew.-%, bevorzugt zwischen 1 und 8 Gew.-%, besonders bevorzugt 2 bis 6 %, eines UV-Absorbers enthält. Als UV-Absorber werden dabei vorzugsweise Triazine, z. B. ^{®}Tinnuvin 1577 der Firma Ciba, Basel, Schweiz, verwendet. Der Einsatz des UV-Absorbers ermöglicht eine bessere Witterungsbeständigkeit, verhindert, dass UV-Strahlen die Lebensdauer der Folie herabsetzen, und bewirkt, dass die Folie sich gut für Außenanwendungen, z. B. Verwendung als Treibhausfolie, eignet.

Die Dicke der erfindungsgemäßen Polyesterfolie kann innerhalb bestimmter Grenzen variieren. Sie liegt vorteilhaft im Bereich von 3 bis 250 µm, insbesondere von 4 bis 100 µm, vorzugsweise von 5 bis 50 µm.

### Herstellungsverfahren:

Die erfindungsgemäß verwendete Polyesterfolie kann nach dem an sich aus der Literatur bekannten Extrusionsverfahren hergestellt werden (siehe z. B.: "Handbook of Thermoplastic Polyesters, Ed. S. Fakirov, Wiley-VCH, 2002" oder im Kapitel Polyesters, Films" in der "Encyclopedia of Polymer Science and Engineering, Vol. 12, John Wiley & Sons, 1988").

Im Rahmen dieses Verfahrens wird so vorgegangen, dass die der Folie entsprechende Schmelze durch eine Flachdüse extrudiert wird, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht noch corona- oder flammbehandelt wird.

Die biaxiale Streckung (Orientierung) wird im Allgemeinen aufeinander folgend durchgeführt, wobei die aufeinander folgende biaxiale Streckung, bei der gewöhnlich zuerst längs (in Maschinenrichtung) und dann quer (senkrecht zur Maschinenrichtung) gestreckt wird, bevorzugt ist.

Zunächst wird, wie beim Extrusionsverfahren üblich, das Polymere bzw. die Polymermischung für die Folie in einem Extruder komprimiert und verflüssigt, wobei die gegebenenfalls als Zusätze vorgesehenen Additive wie Partikel bereits im Polymer bzw. in der Polymermischung enthalten sein können. Die Schmelze wird dann gleichzeitig durch eine Flachdüse (Breitschlitzdüse) gepresst, und die ausgepresste Schmelze wird auf einer oder mehreren gekühlten Abzugswalzen abgezogen, wobei die Schmelze abkühlt und sich zu einer Vorfolie verfestigt.

Die biaxiale Streckung wird im Allgemeinen sequentiell durchgeführt. Dabei wird die Vorfolie vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung im Bereich von 80 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie über eine Zeitdauer von etwa 0,1 bis 10 s bei einer Temperatur im Bereich von 150 bis 250 °C gehalten. Anschließend wird die Folie in üblicher Weise aufgewickelt.

Nach der biaxialen Streckung können eine oder beide Oberfläche/n der Folie nach einer der bekannten Methoden corona- oder flammbehandelt werden. Die Behandlungsintensität wird so eingestellt, dass sich eine Oberflächenspannung im Bereich von über 45 mN/m einstellt.

Zur Einstellung weiterer gewünschter Eigenschaften kann die Folie zusätzlich beschichtet werden. Typische Beschichtungen sind haftvermittelnd, antistatisch, schlupfverbessernd, hydrophil oder dehäsiv wirkend. Es bietet sich an, diese zusätzlichen Schichten über In-line-Beschichtung mittels wässriger Dispersionen nach dem Streckschritt in Längsrichtung und vor dem Streckschritt in Querrichtung auf die Folie aufzubringen.

Bei der Herstellung der erfindungsgemäß verwendeten Folie ist gewährleistet, dass das Verschnittmaterial (Regenerat) in einer Menge im Bereich von 20 bis 70 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere nicht ihr optisches Erscheinungsbild.

Die erfindungsgemäß verwendete Folie zeichnet sich durch definierte optische Eigenschaften und eine gleichmäßige Rauigkeit aus. Die folgende Tabelle 1 gibt die Eigenschaften der erfindungsgemäß verwendeten Folien wieder.

**Tabelle 1**

| **Folieneigenschaften** | **erfindungs gemäßer Bereich** | **bevorzugt** | **besonders bevorzugt** | **Einhei**t | **Messmethode** |
|---|---|---|---|---|---|
| **Gehalt an SiO₂** | 0,2-<1,0 | 0,4-0,9 | 0,6-0,8 | Gew.-% | |
| **Partikelgröße SiO₂ (d₅₀)** | 2,5- 4,5 2,5- 4,5 2,8- 4,0 | 2,8- 4,0 | 3,0-3,9 3,0- 3,9 | µm | |
| **Transparenz** | 70-95 | 80-92 | 82-90 | % | ASTM-D 1003-00 |
| **Glanz 60°** | 10-100 | 15-85 | 20-70 | | DIN 67 530 |
| **Glanz 85°** | 10-100 | 15-85 | 20-70 | | DIN 67 530 |
| **Trübung** | 38-60 | 40-58 | 42-56 | % | ASTM-D 1003-00 |
| **Arithmetische Mittenrauigkeit Rₐ** | 170- 1000 | 180-950 | 200-800 | nm | DIN 4762 |
| **Dicke** | 3-250 | 4-100 | 5-50 | µm | |
| **UV-Absorber** | 0-10 | 1-8 | 2-6 | Gew.-% | |

Aufgrund ihrer optischen Eigenschaften eignen sich die erfindungsgemäß verwendeten Folien besonders im industriellen Sektor, z. B. für Treibhäuser zur diffuseren Streuung des Lichtes. Dadurch erhöht sich die Wachstumsgeschwindigkeit der Pflanzen und führt zu einer besseren Wirtschaftlichkeit. Bei Verwendung eines UV-Absorbers erhöht sich die Witterungsbeständigkeit und somit die Lebensdauer der Folie.

Zur Charakterisierung der Rohstoffe und der Folien wurden im Rahmen der vorliegenden Erfindung die folgenden Messmethoden benutzt:

### Rauigkeit

Der arithmetische Mittenrauwert Rₐ wurde nach der DIN 4762 bestimmt.

### Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

### Messung des mittleren Durchmessers d₅₀

Die Bestimmung des mittleren Durchmessers d₅₀ wurde mittels Laser auf einem Malvem Master Sizer nach der Standardmethode durchgeführt (andere Messgeräte sind z. B. Horiba LA 500 oder Sympathec Helos, welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des d₅₀-Wertes.

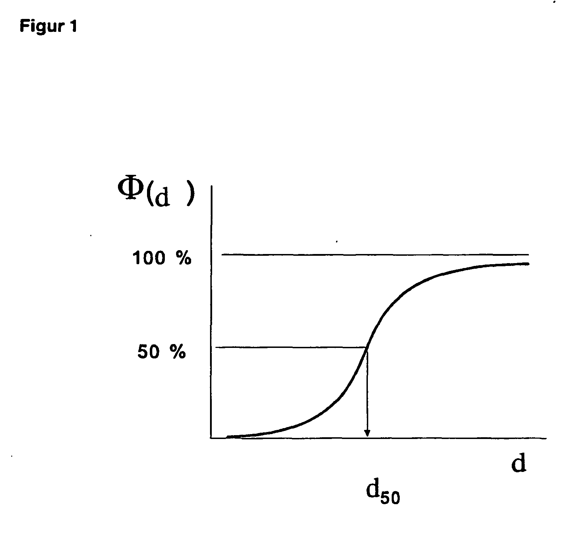

Der d₅₀-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse sofort den gewünschten d₅₀-Wert. Wie dies zu verstehen ist, wird in **Figur 1** näher verdeutlicht.

### Transparenz und Trübung

Die Messung an den Polyesterfolien erfolgt am Hazegard Hazemeter XL-211 der Fa. BYK Gardner nach ASTM-D 1003-00.

Im Folgenden wird die Erfindung anhand von Beispielen näher erläutert. Erfindungsgemäß verwendbare Folien sind als "Beispiel" gekennzeichnet; solche, die nicht erfindungsgemäß verwendet werden können, mit "Vergleichsbeispiel".

### Beispiel 1

Chips aus Polyethylenterephthalat wurden bei einer Temperatur von 150 °C dem Extruder für die Basisschicht (B) zugeführt. Dann wurde durch Extrusion und anschließende stufenweise Orientierung in Längs- und Querrichtung eine einschichtige Folie mit der Gesamtdicke von 20 µm hergestellt.

Folie, Mischung aus:

| | |
|---|---|
| 75 Gew.-% | Polyethylenterephthalat mit einem SV-Wert von 750 |
| 25 Gew.-% | Masterbatch aus 96 Gew.-% Polyethylenterephthalat, 3,0 Gew.-% Kieselsäurepartikel mit einem d₅₀-Wert von 3,5 µm und 1,0 Gew.-% UV-Absorber ^{®}Tinnuvin 1577 der Firma Ciba, Schweiz. |

Die Herstellungsbedingungen in den einzelnen Verfahrensschritten waren:

| | | |
|---|---|---|
| Extrusion: | Temperatur | 290 °C |
| | Temperatur der Abzugswalze | 30 °C |
| Längsstreckung: | Temperatur: | 80-126 °C |
| | Längsstreckverhältnis: | 3,5 |
| Querstreckung: | Temperatur: | 80-135 °C |
| | Querstreckverhältnis | 4,0 |
| Fixierung: | Temperatur: | 230 °C |
| | Dauer: | 3 s |

Die Folie hatte die geforderte Trübung und Transparenz. Die erzielten Eigenschaften der Folie sind in Tabelle 2 wiedergegeben.

### Beispiel 2

Im Vergleich zu Beispiel 1 wurde die Zusammensetzung der Folie wie folgt geändert:
Folie, Mischung aus:

| | |
|---|---|
| 67 Gew.-% | Polyethylenterephthalat mit einem SV-Wert von 750 |
| 33 Gew.-% | Masterbatch aus 96 Gew.-% Polyethylenterephthalat, 3,0 Gew.-% Kieselsäurepartikel mit einem d₅₀-Wert von 3,5 µm und 1,0 Gew.-% UV-Absorber ^{®}Tinnuvin 1577 der Firma Ciba, Schweiz. |

Die Trübung der Folie hat sich gegenüber Beispiel 1 um 12 Prozentpunkte erhöht, die Transparenz um 1 Prozentpunkt verringert und die arithmetische Rauigkeit Rₐ hat sich um 34 nm erhöht. Die erzielten Eigenschaften der Folie sind in Tabelle 2 wiedergegeben.

### Beispiel 3

Im Vergleich zu Beispiel 1 wurde die Zusammensetzung der Folie wie folgt geändert:
Folie, Mischung aus:

| | |
|---|---|
| 83 Gew.-% | Polyethylenterephthalat mit einem SV-Wert von 750 |
| 17 Gew.-% | Masterbatch aus 96 Gew.-% Polyethylenterephthalat, 3,0 Gew.-% Kieselsäurepartikel mit einem d₅₀-Wert von 3,5 µm und 1,0 Gew.-% UV-Absorber ^{®}Tinnuvin 1577 der Firma Ciba, Schweiz. |

Die Trübung der Folie hat sich gegenüber Beispiel 1 um 12 Prozentpunkte erniedrigt, die Transparenz um 2 Prozentpunkte erhöht und die arithmetische Rauigkeit Rₐ um 49 nm erniedrigt. Die erzielten Eigenschaften der Folie sind in Tabelle 2 wiedergegeben.

### Vergleichsbeispiel 1

Im Vergleich zu Beispiel 1 wurde jetzt die Folie mit einem anderem Partikelsystem modifiziert. Die Trübung der Folie und die arithmetische Rauigkeit Rₐ sind zu niedrig.

Folie, Mischung aus:

| | |
|---|---|
| 75 Gew.-% | Polyethylenterephthalat mit einem SV-Wert von 750 |
| 25 Gew.-% | Masterbatch aus 96 Gew.-% Polyethylenterephthalat, 3,0 Gew.-% Kieselsäurepartikel mit einem d₅₀-Wert von 2,4 µm und 1,0 Gew.-% UV-Absorber ^{®}Tinnuvin 1577 der Firma Ciba, Schweiz |

Die erzielten Eigenschaften der Folie sind in Tabelle 2 wiedergegeben.

### Vergleichsbeispiel 2

Vergleichsbeispiel 2 wurde aus EP-A-1 197 326 (Beispiel 1) entnommen. Die Transparenz der Folie ist zu niedrig.

**Tabelle 2**

| **Beispiel** | **Foliendicke** | **Durchmesser SiO₂ in Folie** | **Konzentration SiO₂** | **Trübung** | **Rauigkeit Rₐ** | **Transparenz** | **Glanz bei 60° / 85°** |
|---|---|---|---|---|---|---|---|
| | **[µm]** | **[µm]** | **[%]** | **[%]** | **[nm]** | **[%]** | |
| **B 1** | 20 | 3,5 | 0,75 | 50 | 261 | 85 | 49 / 53 |
| **B 2** | 20 | 3,5 | 0,99 | 62 | 295 | 84 | 38 / 48 |
| **B 3** | 20 | 3,5 | 0,51 | 38 | 212 | 87 | 63 / 65 |
| **VB 1** | 20 | 2,4 | 0,75 | 31 | 148 | 87 | 63 / 77 |
| **VB 2** | 23 | 3,4 | 5,00 | 65 | 230 | 69 | 35 / 45 |

## Patentansprüche

1. Verwendung einer einschichtigen, biaxial orientierten Polyesterfolie, welche Siliziumdioxidpartikel mit einer mittleren Teilchengröße (d₅₀) von 2,5 bis 4,5 µm in einer Menge von 0,2 bis <1,0 Gew.-% (bezogen auf das Gesamtgewicht der Folie) enthält, wobei der Glanz der Folie, gemessen bei 60° und 85° (nach DIN 67 530), bei beiden Messwinkeln zwischen 10 und 100 liegt und wobei die Folie - abgesehen von gegebenenfalls vorhandenen Katalysatorpräzipitaten - keine weiteren Partikel enthält, die die Oberflächeneigenschaften und/oder Optik der Folie beeinflussen bzw. beeinflussen können, im industriellen Sektor.

2. Verwendung nach Anspruch 1, **dadurch gekennzeichnet, dass** die Trübung der Folie im Bereich zwischen 38 und 60 % liegt und gleichzeitig ihre Transparenz im Bereich zwischen 70 und 95 % (beide Werte gemessen nach ASTM D 1003-00).

3. Verwendung nach einem der Ansprüche 1 oder 2, **dadurch gekennzeichnet, dass** der arithmetische Mittenrauwert Rₐ (gemessen nach DIN 4762) mindestens einer Oberfläche der Folie zwischen 170 und 1000 nm liegt.

4. Verwendung nach einem der Ansprüche 1 bis 3, **dadurch gekennzeichnet, dass** die Folie einen UV-Stabilisator enthält.

5. Verwendung nach einem der Ansprüche 1 bis 4, **dadurch gekennzeichnet, dass** die Siliziumdioxidpartikel amorphe Kieselsäurepartikel sind.

6. Verwendung nach einem der Ansprüche 1 bis 5, **dadurch gekennzeichnet, dass** die Folie eine Dicke von 3 bis 250 µm aufweist.

7. Verwendung nach einem der Ansprüche 1 bis 6 als Treibhausfolie.

8. Verwendung nach einem der Ansprüche 1 bis 7 im Außenbereich.

## Claims

1. Use of a single-layer biaxially oriented polyester film, which contains silica particles with an average particle size (d₅₀) of 2.5 to 4.5 µm in an amount from 0.2 to < 1.0 % by weight (based on the total weight of the film), wherein the gloss of the film, measured at 60° and 85° (according to DIN 67 530), is between 10 and 100 at both measuring angles, and wherein the film does not contain any further particles -except for catalyst precipitates which may be present where applicable- which affect or may affect the surface properties and/or optical characteristic of the film, in the industrial sector.

2. Use according to claim 1, **characterized in that** the haze of the film is within the range between 38 and 60% and at the same time its transparency is within the range between 70 and 95% (both values measured according to ASTM D 1003-00).

3. Use according to one of claims 1 or 2, **characterized in that** the arithmetic mean roughness Rₐ (measured according to DIN 4762) of at least one surface of the film is between 170 and 1000 nm.

4. Use according to one of claims 1 to 3, **characterized in that** the films contains a UV-stabilizer.

5. Use according to one of claims 1 to 4, **characterized in that** the silica particles are amorphous silica particles.

6. Use according to one of claims 1 to 5, **characterized in that** the film has a thickness of from 3 to 250 µm.

7. Use according to one of claims 1 to 6 as greenhouse film.

8. Use according to one of claims 1 to 7 in outdoor applications.

## Revendications

1. Utilisation d'un film polyester monocouche orienté biaxialement contient des particules de silice ayant une dimension moyenne de particule (d₅₀) de 2.5 à 4.5 µm dans une quantité de 0.2 à <1.0 % en poids (par rapport au poids total du film), **caractérisé en ce que**: la brillance du film, mesurée à 60° et 85° (conformément à DIN 67 530), est entre 10 et 100 pour les deux angles de mesure, et **caractérisé en ce que**: le film ne contient pas des autres particules -à part des précipités catalyseur, qui peuvent être présents- qu'influencent ou peuvent influencer les propriétés de surface et/ou l'optique du film, dans le secteur industriel.

2. Utilisation conformément de la revendication 1, **caractérisé en ce que**: la turbidité du film est entre 38 et 60% et en même temps la transparence du film est entre 70 et 95% (toutes les deux valeurs sont mesurée conformément à ASTM D 1003-00).

3. Utilisation conformément à une des revendications 1 ou 2, **caractérisé en ce que**: la rugosité moyenne arithmétique Rₐ (mesurée conformément à DIN 4762) d'au moins une surface du film est entre 170 et 1000 nm.

4. Utilisation conformément à une des revendications 1 à 3, **caractérisé en ce que**: le film contient un stabilisant UV.

5. Utilisation conformément à une des revendications 1 à 4, **caractérisé en ce que**: les particules des silice sont des particules de silice amorphe.

6. Utilisation conformément à une des revendications 1 à 5, **caractérisé en ce que**: le film a une épaisseur de 3 à 250 µm.

7. Utilisation conformément à une des revendications 1 à 6 comment film de serres.

8. Utilisation conformément à une des revendications 1 à 7 dans les applications extérieures.
